# EUROPEAN PATENT APPLICATION

(11) **EP 4 722 005 A1**
(43) Date of publication of application: **08.04.2026**
(21) Application number: 25189501.7
(22) Date of filing: 15.07.2025
(51) Int. Cl.: B60C 11/24

(54) **TIRE REMAINING SERVICE LIFE PREDICTION SYSTEM, METHOD, AND PROGRAM**

(30) Priority: 02.10.2024 JP 2024173889
(71) Applicant: SUMITOMO RUBBER INDUSTRIES, LTD., Kobe-shi, Hyogo 651-0072 (JP)
(72) Inventor: MITARAI, Yasuo, Hyogo, 651-0072 (JP)
(74) Representative: Forresters IP LLP

(57) **Abstract**

A tire determination system 100 includes: a depth camera 4 configured to capture an image of a tire mounted on a vehicle 5; a determination processing unit configured to determine whether or not uneven wear has occurred in the tire, based on the captured image captured by the depth camera 4; a first acquisition processing unit configured to acquire transition information indicating transition of a remaining groove of the tire; and a prediction processing unit configured to predict a remaining service life of the tire, based on a degree of progress of the uneven wear determined based on the captured image and the transition information acquired by the first acquisition processing unit, if the determination processing unit determines that the uneven wear has occurred.

## Description

### BACKGROUND OF THE INVENTION

### Field of the Invention

The present disclosure relates to a tire remaining service life prediction system, a tire remaining service life prediction method, and a program.

### Background Art

A system for, based on a captured image of a tire mounted on a vehicle, determining the degree of progress of uneven wear of the tire is known (see Japanese Laid-Open Patent Publication No. 2023-55522).

Uneven wear of the tire can be resolved by performing rotation on the tire in the vehicle on which the tire is mounted. Here, if the remaining service life of the tire in which uneven wear has occurred can be notified to the user of the vehicle, it is possible to promote the user to perform rotation on the tire. However, conventionally, there has been no structure for predicting the remaining service life of the tire in which uneven wear has occurred. Therefore, it has not been possible to notify the user of the vehicle of the remaining service life of the tire in which uneven wear has occurred.

An object of the present disclosure is to provide a tire remaining service life prediction system, a tire remaining service life prediction method, and a program that can predict the remaining service life of a tire in which uneven wear has occurred.

### SUMMARY OF THE INVENTION

A tire remaining service life prediction system according to one aspect of the present disclosure includes a camera, a determination processing unit, a first acquisition processing unit, and a prediction processing unit. The camera is configured to capture an image of a tire mounted on a vehicle. The determination processing unit is configured to determine whether or not uneven wear has occurred in the tire, based on the captured image captured by the camera. The first acquisition processing unit is configured to acquire transition information indicating transition of a remaining groove of the tire. The prediction processing unit is configured to predict a remaining service life of the tire, based on a degree of progress of the uneven wear determined based on the captured image and the transition information acquired by the first acquisition processing unit, if the determination processing unit determines that the uneven wear has occurred.

With this tire remaining service life prediction system, it is possible to predict the remaining service life of the tire in which uneven wear has occurred.

According to the present disclosure, it is possible to predict the remaining service life of the tire in which uneven wear has occurred

### BRIEF DESCRIPTION OF THE DRAWINGS

FIG. 1 illustrates the configuration of a tire determination system according to an embodiment of the present disclosure;
FIG. 2 illustrates the configuration of a mobile terminal of the tire determination system according to the embodiment of the present disclosure;
FIG. 3 illustrates the configuration of a server of the tire determination system according to the embodiment of the present disclosure;
FIG. 4 is a flowchart showing an example of a tire determination process executed in the tire determination system according to the embodiment of the present disclosure;
FIG. 5 illustrates an example of a first inspection result screen displayed in the tire determination system according to the embodiment of the present disclosure;
FIG. 6 illustrates an example of the transition of a remaining groove of a tire;
FIG. 7 illustrates an example of the transition of the remaining groove of the tire;
FIG. 8 illustrates an example of the transition of the remaining groove of the tire;
FIG. 9 illustrates an example of the transition of the remaining groove of the tire;
FIG. 10 illustrates an example of the transition of the remaining groove of the tire;
FIG. 11 illustrates an example of the transition of the remaining groove of the tire;
FIG. 12 illustrates the configuration of a server of a tire determination system according to another embodiment of the present disclosure; and
FIG. 13 illustrates an example of a second inspection result screen displayed in the tire determination system according to the other embodiment of the present disclosure.

### DETAILED DESCRIPTION

Hereinafter, embodiments of the present disclosure will be described with reference to the accompanying drawings. The following embodiments are examples in which the present disclosure is embodied and do not limit the technical scope of the present disclosure.

### [Configuration of Tire Determination System 100]

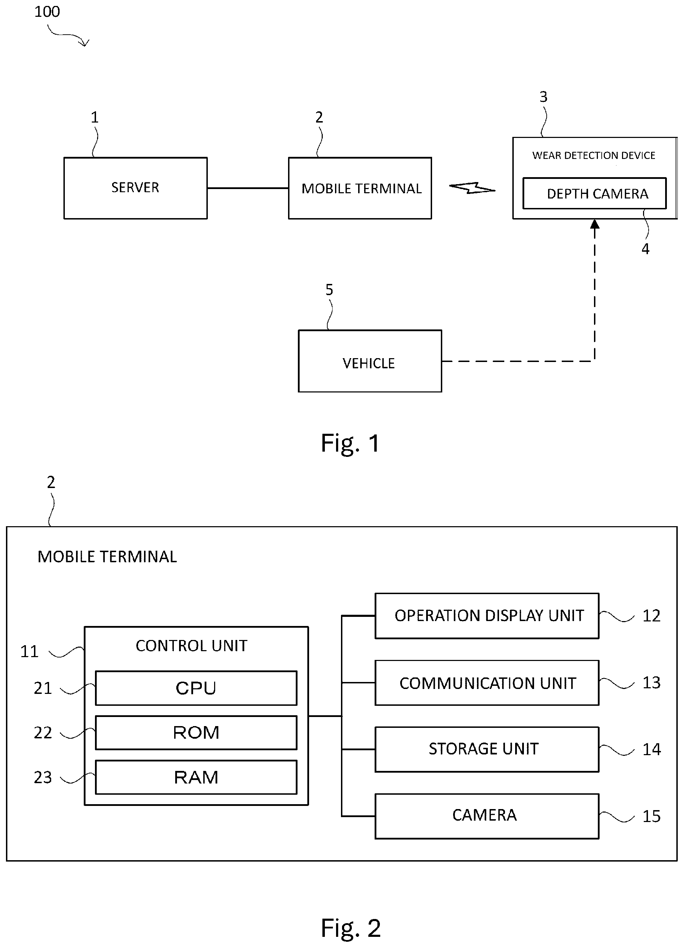

First, the configuration of a tire determination system 100 according to an embodiment of the present disclosure will be described with reference to FIG. 1.

The tire determination system 100 determines a wear state of a tire of a vehicle 5 (see FIG. 1).

Specifically, the vehicle 5 is a truck used in a transportation business.

Also, the tire is a pneumatic tire.

The vehicle 5 is not limited to a truck and may be any movable body that travels using the tire. For example, the vehicle 5 may be a passenger car, a bus, a motorcycle, a three-wheeled passenger car, a motorized bicycle, or a bicycle. The vehicle 5 may also be a trailer or a load vehicle such as a hand truck.

In addition, the tire is not limited to the pneumatic tire and may be a non-pneumatic tire such as a so-called solid tire. The tire may also be a resin tire in which a thermoplastic elastomer is used.

As shown in FIG. 1, the tire determination system 100 includes a server 1, a mobile terminal 2, and a wear detection device 3.

In the tire determination system 100, the server 1 and the mobile terminal 2 are connected to each other by a communication network, such as the Internet or a local area network (LAN), so as to be able to communicate with each other.

In addition, in the tire determination system 100, the wear detection device 3 is capable of executing wireless communication with the mobile terminal 2 in accordance with wireless LAN communication standards such as Bluetooth (registered trademark) or IEEE 802.11ac (Wi-Fi). For example, pairing, which is an authentication procedure for a communication partner in Bluetooth communication, is executed in advance between the wear detection device 3 and the mobile terminal 2. For example, the wear detection device 3 executes wireless communication by Bluetooth with the mobile terminal 2 that exists within a range of about 10 m, at a radio wave intensity (2.5 mW) referred to as Class 2.

The wear detection device 3 detects the wear state of the tire. The wear detection device 3 is carried to a work site for inspection work for the tire by a worker who performs the inspection work for the tire. The inspection work for the tire is performed at a business office of a transportation business entity that operates a transportation business using the vehicle 5.

As shown in FIG. 1, the wear detection device 3 includes a depth camera 4. The wear detection device 3 also includes a communication unit that executes wireless communication with the mobile terminal 2 via Bluetooth or wireless LAN (Wi-Fi). The wear detection device 3 also includes a control unit that centrally controls the wear detection device 3.

The depth camera 4 is capable of detecting the distance to a subject. The depth camera 4 is also referred to as three-dimensional camera. For example, the depth camera 4 captures an image of the subject using a stereo camera method. The depth camera 4 is used to capture an image of the tire mounted on the vehicle 5. By capturing an image of a tread portion of the tire using the depth camera 4, it is possible to measure the depth of the shallowest groove (remaining groove) among a plurality of grooves included in the tread portion. The depth camera 4 may capture an image of the subject using a method different from the stereo camera method, such as a time-of-flight (ToF) method.

For example, when an imaging instruction is transmitted from the mobile terminal 2 to the wear detection device 3, the wear detection device 3 captures an image of the subject (tire) using the depth camera 4. Then, the wear detection device 3 transmits captured image data indicating the captured subject (tire) to the mobile terminal 2.

The wear detection device 3 may include an operation unit used to input the imaging instruction. In this case, the wear detection device 3 may execute an imaging process using the depth camera 4 and a process of transmitting the captured image data in response to operations by the user on the operation unit.

### [Configuration of Mobile Terminal 2]

Next, the configuration of the mobile terminal 2 will be described with reference to FIG. 2.

The mobile terminal 2 is a portable terminal device that functions as a user interface of the tire determination system 100.

Specifically, the mobile terminal 2 is a smartphone carried by the worker.

The mobile terminal 2 is not limited to the smartphone and may be a tablet terminal or a laptop computer. In addition, the mobile terminal 2 is not limited to the general-purpose terminal device and may be a dedicated terminal device specialized for the user interface function of the tire determination system 100.

As shown in FIG. 2, the mobile terminal 2 includes a control unit 11, an operation display unit 12, a communication unit 13, a storage unit 14, and a camera 15.

The control unit 11 centrally controls the mobile terminal 2. As shown in FIG. 2, the control unit 11 includes a CPU 21, a ROM 22, and a RAM 23. The CPU 21 is a processor that executes various arithmetic processes. The ROM 22 is a nonvolatile storage device in which information such as a control program for causing the CPU 21 to execute various processes is stored in advance. The RAM 23 is a volatile or nonvolatile storage device that is used as a temporary storage memory (work area) for various processes executed by the CPU 21. The CPU 21 executes various control programs stored in the ROM 22 in advance. Accordingly, the CPU 21 centrally controls the mobile terminal 2.

The operation display unit 12 is a user interface of the mobile terminal 2. The operation display unit 12 includes a display section and an operation section. The display section displays various kinds of information in response to control instructions from the control unit 11. For example, the display section is a flat panel display such as a liquid crystal display. The operation section inputs various kinds of information to the control unit 11 in response to operations by the user. For example, the operation section includes an operation key and a touch panel.

The communication unit 13 is a communication interface capable of executing wireless data communication with external devices. Specifically, the communication unit 13 executes data communication with the server 1 via the communication network. The communication unit 13 executes wireless communication via Bluetooth with the wear detection device 3.

The storage unit 14 is a nonvolatile storage device. For example, the storage unit 14 is a nonvolatile memory such as a flash memory.

In the storage unit 14, worker information regarding the worker is stored in advance. For example, the worker information includes information indicating the name of a company to which the worker belongs, information indicating the name of a business office to which the worker belongs, and information indicating the name of the worker. The worker information also includes information indicating the number of visits by the worker to the business office of the transportation business entity during a predetermined aggregation period, information indicating the number of vehicles 5 inspected by the worker during the aggregation period, etc.

The camera 15 is a two-dimensional camera that captures images of a subject.

### [Configuration of Server 1]

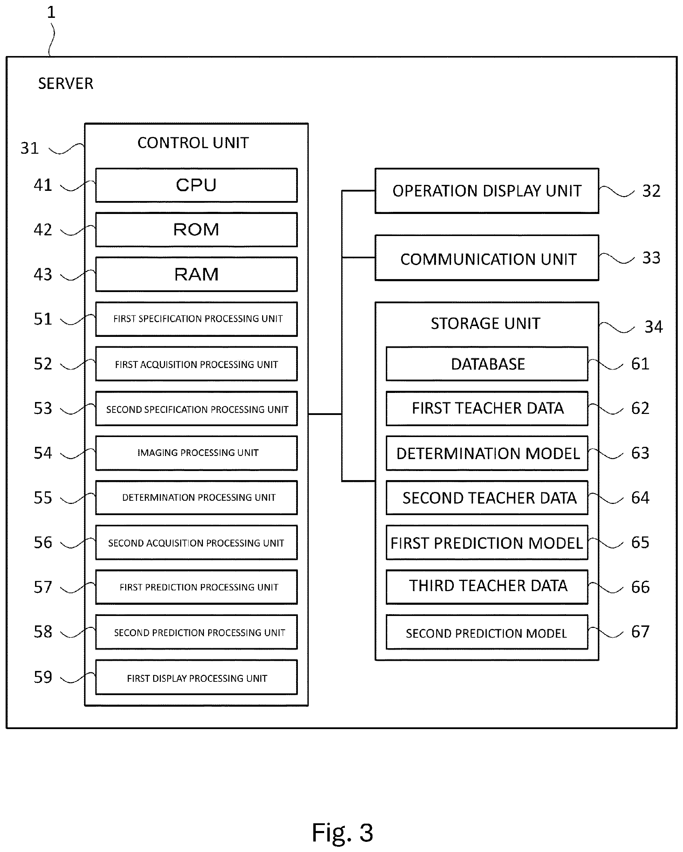

Next, the configuration of the server 1 will be described with reference to FIG. 3.

The server 1 is an information processing apparatus that realizes main functions of the tire determination system 100.

As shown in FIG. 3, the server 1 includes a control unit 31, an operation display unit 32, a communication unit 33, and a storage unit 34.

The control unit 31 centrally controls the server 1. As shown in FIG. 3, the control unit 31 includes a CPU 41, a ROM 42, and a RAM 43. The CPU 41 is a processor that executes various arithmetic processes. The ROM 42 is a nonvolatile storage device in which information such as a control program for causing the CPU 41 to execute various processes is stored in advance. The RAM 43 is a volatile or nonvolatile storage device that is used as a temporary storage memory (work area) for various processes executed by the CPU 41. The CPU 41 executes various control programs stored in the ROM 42 in advance. Accordingly, the CPU 41 centrally controls the server 1.

The operation display unit 32 is a user interface of the server 1. The operation display unit 32 includes a display section and an operation section. The display section displays various kinds of information in response to control instructions from the control unit 31. For example, the display section is a flat panel display such as a liquid crystal display. The operation section inputs various kinds of information into the control unit 31 in response to operations by the user. For example, the operation section includes a keyboard, a mouse, and a touch panel.

The communication unit 33 is a communication interface capable of executing wireless data communication with external devices. Specifically, the communication unit 33 executes data communication with the mobile terminal 2 via the communication network.

The storage unit 34 is a nonvolatile storage device. For example, the storage unit 34 is a storage device, such as a nonvolatile memory such as a flash memory, a solid state drive (SSD), and a hard disk drive (HDD).

As shown in FIG. 3, a database 61 is stored in the server 1.

In the database 61, vehicle data regarding the vehicle 5 is registered in advance. For example, the vehicle data is composed of a vehicle ID, registration number information, vehicle name information, vehicle dimension information, axle configuration information, double tire information, spare tire information, business entity information, and business office information.

The vehicle ID is identification information of the vehicle 5 assigned by the server 1. The registration number information is information indicating a vehicle registration number displayed on a license plate of the vehicle 5. The vehicle name information is information indicating the trade name of the vehicle 5. The vehicle dimension information is information indicating the dimensions of the vehicle 5.

The axle configuration information is information indicating the axle configuration of the vehicle 5. For example, the axle configuration includes a first axle configuration composed of a front wheel axle and a rear wheel axle. The axle configuration also includes a second axle configuration composed of a front wheel first axle, a front wheel second axle on the rear side of the front wheel first axle, and a rear wheel axle. The axle configuration also includes a third axle configuration composed of a front wheel axle, a rear wheel first axle, and a rear wheel second axle on the rear side of the rear wheel first axle. The axle configuration also includes a fourth axle configuration composed of a front wheel first axle, a front wheel second axle, a rear wheel first axle, and a rear wheel second axle.

The double tire information is information indicating whether or not the rear wheels of the vehicle 5 are double tires. The spare tire information is information indicating the presence or absence of a spare tire in the vehicle 5. The business entity information is information indicating the name of the transportation business entity. The business office information is information indicating the name of a business office where the vehicle 5 is parked, among the business offices of the transportation business entity.

When the information other than the vehicle ID among the plurality of pieces of information constituting the vehicle data is inputted by a user of the tire determination system 100, the server 1 generates the vehicle ID corresponding to the inputted information. Then, the server 1 registers the generated vehicle ID and the information inputted by the user, in the database 61 as new vehicle data.

In addition, in the database 61, tire data regarding the tire is registered in advance. For example, the tire data is composed of a tire ID, the vehicle ID of the vehicle 5 on which the tire is mounted, tire name information, tire dimension information, tread pattern information, use information, retread information, and mounting position information.

The tire ID is identification information of the tire assigned by the server 1. The tire name information is information indicating the trade name of the tire. The tire dimension information is information indicating the dimensions of the tire. The tread pattern information is information used for identifying the tread pattern of the tire. The use information is information indicating whether the tire is a summer tire, a winter tire, or an all-season tire. The retread information is information indicating whether the tire is a new tire or a retreaded tire.

The mounting position information is information indicating which of a plurality of tire mounting positions in the vehicle 5 the tire is mounted at. The plurality of the tire mounting positions in the vehicle 5 are specified by a combination of the axle configuration in the vehicle 5, whether or not the rear wheels are double tires, and the presence or absence of the spare tire.

For example, it is assumed that there is a vehicle 5 in which the axle configuration is the first axle configuration, the rear wheels are double tires, and the spare tire is included. A plurality of the tire mounting positions in the vehicle 5 are (1) a front wheel axle left side position, (2) a front wheel axle right side position, (3) a rear wheel axle left outside position, (4) a rear wheel axle left inside position, (5) a rear wheel axle right inside position, (6) a rear wheel axle right outside position, and (7) a spare tire mounting position.

It is also assumed that there is a vehicle 5 in which the axle configuration is the fourth axle configuration, the rear wheels are double tires, and the spare tire is included. A plurality of the tire mounting positions in the vehicle 5 are (1) a front wheel first axle left side position, (2) a front wheel first axle right side position, (3) a front wheel second axle left side position, (4) a front wheel second axle right side position, (5) a rear wheel first axle left outside position, (6) a rear wheel first axle left inside position, (7) a rear wheel first axle right inside position, (8) a rear wheel first axle right outside position, (9) a rear wheel second axle left outside position, (10) a rear wheel second axle left inside position, (11) a rear wheel second axle right inside position, (12) a rear wheel second axle right outside position, and (13) a spare tire mounting position.

When the information other than the tire ID among the plurality of pieces of information constituting the tire data is inputted by the user of the tire determination system 100, the server 1 generates the tire ID corresponding to the inputted information. Then, the server 1 registers the generated tire ID and the information inputted by the user, in the database 61 as new tire data.

In addition, tire inspection data regarding inspection work for the tire is registered in the database 61. For example, the tire inspection data is composed of a tire inspection ID, the tire ID of the tire to be inspected, inspection date information, inspection location information, inspection worker information, traveling distance information, air pressure information, remaining groove information, the captured image data captured by the depth camera 4, and determination result information. The tire inspection ID is identification information of tire inspection work assigned by the server 1. The inspection date information is information indicating the date when the inspection work for the tire was performed. The inspection location information is information indicating the location where the inspection work for the tire was performed. The inspection worker information is information indicating the name of the worker who performs the inspection work for the tire. The traveling distance information is information indicating the traveling distance of the vehicle 5, on which the tire to be inspected is mounted, at the time of the inspection work for the tire. The air pressure information is information indicating detection results of the air pressure and air temperature of the tire. The remaining groove information is information indicating measurement results of the remaining groove of the tire. The determination result information is information indicating a determination result based on data obtained through the inspection work for the tire. Specifically, the determination result information includes information indicating a determination result of whether or not the tire is unevenly worn. The determination result information also includes information indicating a determination result of whether or not it is necessary to perform rotation on the tire. The determination result information also includes information indicating a determination result of whether or not it is necessary to replace the tire.

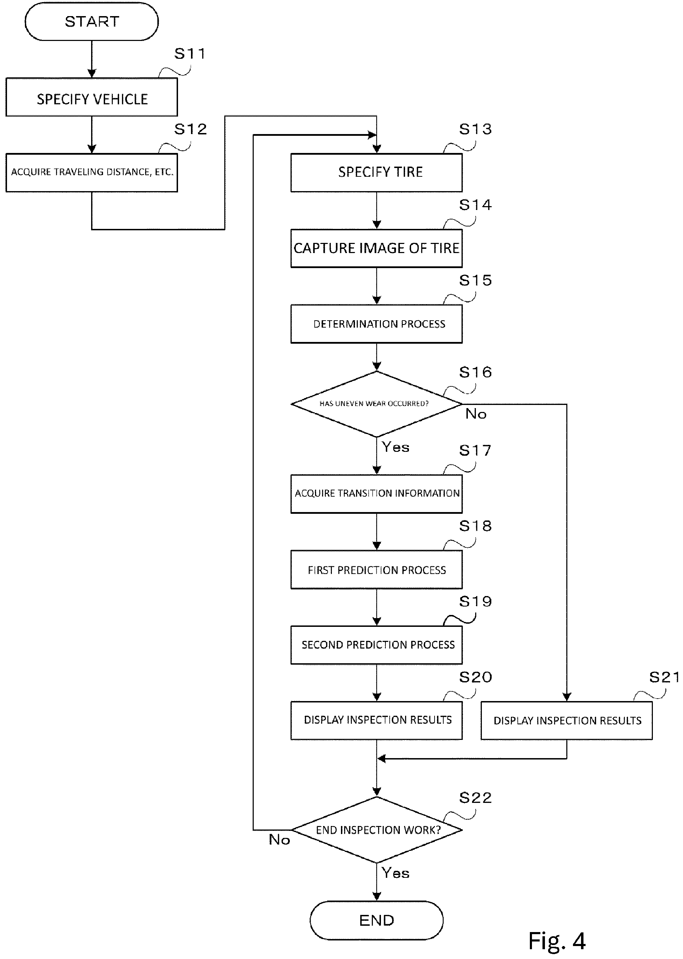

In the tire determination system 100, the traveling distance information, the air pressure information, the remaining groove information, the captured image data, and the determination result information are acquired by executing a tire determination process (see FIG. 4) described later. When the tire determination process described later is executed, the server 1 generates the tire inspection data including the information acquired by this process. Then, the server 1 registers the generated tire inspection data in the database 61.

Meanwhile, a system that, based on a captured image of the tire mounted on the vehicle 5, determines the degree of progress of uneven wear of the tire, is known.

Uneven wear of the tire can be resolved by performing rotation on the tire in the vehicle 5 on which the tire is mounted. Here, if the remaining service life of the tire in which uneven wear has occurred can be notified to the user of the vehicle 5, it is possible to promote the user to perform rotation on the tire. However, conventionally, there has been no structure for predicting the remaining service life of the tire in which uneven wear has occurred. Therefore, it has not been possible to notify the user of the vehicle 5 of the remaining service life of the tire in which uneven wear has occurred.

In contrast, with the tire determination system 100 according to the embodiment of the present disclosure, it is possible to predict the remaining service life of the tire in which uneven wear has occurred, as described later.

Specifically, a tire determination program for causing the control unit 31 to function as a first specification processing unit 51, a first acquisition processing unit 52, a second specification processing unit 53, an imaging processing unit 54, a determination processing unit 55, a second acquisition processing unit 56, a first prediction processing unit 57, a second prediction processing unit 58, and a first display processing unit 59 which are shown in FIG. 3, is stored in the storage unit 34 of the server 1 in advance. The CPU 41 of the control unit 31 functions as each processing unit described above, by executing the tire determination program.

Some or all of the processing units included in the control unit 31 may be composed of an electronic circuit. In addition, the tire determination program may be a program for causing a plurality of processors to function as each processing unit shown in FIG. 3.

The first specification processing unit 51 specifies the vehicle 5 to be inspected, in response to an operation on the mobile terminal 2 by the worker.

Specifically, the first specification processing unit 51 displays a vehicle registration number input screen, which is used to input the vehicle registration number of the vehicle 5 to be inspected, on the operation display unit 12 of the mobile terminal 2. Then, the first specification processing unit 51 specifies a vehicle 5 corresponding to a vehicle registration number inputted on the vehicle registration number input screen, among vehicles 5 registered in the database 61, as the vehicle 5 to be inspected.

The first specification processing unit 51 may specify the vehicle 5 to be inspected, based on a result of capturing an image of the license plate of the vehicle 5 by the camera 15 of the mobile terminal 2.

The first acquisition processing unit 52 acquires the traveling distance of the vehicle 5 to be inspected and the air pressure and the air temperature of each tire of the vehicle 5.

For example, each tire of the vehicle 5 includes an air pressure detection device that detects the air pressure of the tire. The air pressure detection device includes a sensor that periodically detects the temperature and the air pressure of the tire. In addition, the air pressure detection device includes a communication unit that executes wireless communication with external devices. The air pressure detection device also includes a control unit that centrally controls the air pressure detection device.

In addition, the vehicle 5 includes an in-vehicle device that manages various kinds of information regarding the vehicle 5. The in-vehicle device includes a communication unit that executes wireless communication with the server 1 and an external device including the air pressure detection device. The in-vehicle device also includes a storage unit in which information indicating the cumulative traveling distance measured in the vehicle 5 and information indicating the detection results of the air pressure and the air temperature of the tire and transmitted from the air pressure detection device, are stored. The in-vehicle device also includes a control unit that centrally controls the in-vehicle device.

The first acquisition processing unit 52 executes wireless communication with the in-vehicle device of the vehicle 5 to be inspected and acquires the information indicating the cumulative traveling distance of the vehicle 5 and the information indicating the detection results of the air pressure and the air temperature of each tire which are stored in the storage unit of the in-vehicle device.

The first acquisition processing unit 52 may display an input screen for a traveling distance, etc., which is used to input the traveling distance of the vehicle 5 to be inspected and the air pressure and the air temperature of each tire of the vehicle 5, on the operation display unit 12 of the mobile terminal 2. In this case, the first acquisition processing unit 52 may acquire the information inputted on the input screen for a traveling distance, etc., as the traveling distance of the vehicle 5 to be inspected and the air pressure and the air temperature of each tire of the vehicle 5.

The second specification processing unit 53 specifies the tire to be inspected, in response to an operation on the mobile terminal 2 by the worker.

Specifically, the second specification processing unit 53 displays a mounting position selection screen, which is used to select any of a plurality of the tire mounting positions of the vehicle 5 to be inspected, on the operation display unit 12 of the mobile terminal 2. Then, the second specification processing unit 53 specifies the tire corresponding to a combination of the vehicle 5 to be inspected and the tire mounting position selected on the mounting position selection screen, among the tires registered in the database 61, as the tire to be inspected.

The imaging processing unit 54 captures an image of the tire to be inspected, using the depth camera 4.

Specifically, the imaging processing unit 54 displays an imaging operation acceptance screen, which is used for an imaging operation for the tire to be inspected, on the operation display unit 12 of the mobile terminal 2. Then, when the imaging operation is accepted on the imaging operation acceptance screen, the imaging processing unit 54 transmits the imaging instruction to the mobile terminal 2. In addition, the imaging processing unit 54 acquires the captured image data transmitted from the wear detection device 3 to the mobile terminal 2, as the captured image data corresponding to the tire to be inspected, in accordance with the transmission of the imaging instruction.

The determination processing unit 55 determines whether or not uneven wear has occurred in the tire to be inspected, based on the captured image data captured by the depth camera 4. In addition, the determination processing unit 55 determines the degree of progress of the uneven wear in the tire to be inspected, based on the captured image data captured by the depth camera 4.

In the tire determination system 100, it is determined that whether or not uneven wear, called "one-sided wear", in which wear of an end portion of the tire on one side in the axle direction is advanced more than on the other side, has occurred. For example, in the tire determination system 100, if the difference between the amounts of wear of both end portions in the axle direction of the tire exceeds a predetermined threshold value, it is determined that uneven wear (one-sided wear) has occurred.

In addition, in the tire determination system 100, if uneven wear has occurred in the tire, the degree of progress of the uneven wear is evaluated with five stages, from stage 1 (lowest) to stage 5 (highest). The degree of progress of the uneven wear of the tire increases as the difference between the amounts of wear of both end portions in the axle direction of the tire increases. The degree of progress of the uneven wear of the tire may be evaluated with any number of stages.

Specifically, the determination processing unit 55 determines whether or not uneven wear has occurred in the tire to be inspected and the degree of progress of the uneven wear, using a determination model 63 (see FIG. 3) trained based on first teacher data 62 (see FIG. 3).

As shown in FIG. 3, the first teacher data 62 and the determination model 63 are stored in the storage unit 34.

The determination model 63 is a trained model obtained by learning the relationship between: the captured image data of the tire; and whether or not uneven wear has occurred in the tire and the degree of progress of the uneven wear. The determination model 63 outputs information (objective variables) indicating whether or not uneven wear has occurred in the tire and the degree of progress of the uneven wear, in response to input of the captured image data (explanatory variables) of the tire to be inspected.

Specifically, the determination model 63 is a convolutional neural network. The determination model 63 is not limited to the convolutional neural network and may be a trained model that can output information indicating whether or not uneven wear has occurred in the tire and the degree of progress of the uneven wear, in response to input of the captured image data of the tire to be inspected.

The determination model 63 is generated by machine learning using the control unit 31 based on the first teacher data 62 stored in the storage unit 34 and a predetermined algorithm. The determination model 63 may be generated or trained by a control unit of an external information processing apparatus. In this case, the determination model 63 may be transferred from the external information processing apparatus and stored in the storage unit 34.

The first teacher data 62 is a data set that is used to generate and train the determination model 63.

The first teacher data 62 includes a combination of the captured image data of the tire and information (correct answer data) indicating whether or not uneven wear has occurred and the degree of progress of the uneven wear.

Specifically, the first teacher data 62 includes a combination of the captured image data of the tire in which no uneven wear has occurred and information (correct answer data) indicating that no uneven wear has occurred.

The first teacher data 62 also includes a combination of the captured image data of the tire for which the degree of progress of uneven wear is the stage n (1 ≤ n ≤ 5) and information (correct answer data) indicating the degree of progress of the uneven wear is the stage n.

The determination processing unit 55 inputs the captured image data acquired by the imaging processing unit 54 into the determination model 63. Accordingly, information indicating whether or not uneven wear has occurred in the tire to be inspected and the degree of progress of the uneven wear is outputted from the determination model 63. The determination processing unit 55 acquires the information outputted from the determination model 63, as a determination result.

The second acquisition processing unit 56 acquires transition information indicating the transition of the remaining groove of the tire to be inspected. The second acquisition processing unit 56 is an example of a first acquisition processing unit of the present disclosure.

In the tire determination system 100, the transition information is a relational expression indicating the relationship between the remaining groove of the tire to be inspected and the traveling distance of the vehicle 5, on which the tire is mounted, from the time at which the tire was mounted thereto.

Specifically, the second acquisition processing unit 56 acquires a relational expression (the transition information) indicating the relationship between the traveling distance of the vehicle 5 to be inspected from the time at which the tire was mounted thereto and the remaining groove of the tire in a period from the start of use of the tire to be inspected to the present. The relational expression can be acquired based on the current traveling distance of the vehicle 5, the current remaining groove of the tire, and the past tire inspection data of the tire stored in the database 61. The current traveling distance of the vehicle 5 is acquired by the first acquisition processing unit 52. The current remaining groove of the tire is acquired based on a result of capturing an image of the tire by the imaging processing unit 54.

If the determination processing unit 55 determines that uneven wear has occurred, the first prediction processing unit 57 predicts the remaining service life of the tire, based on the degree of progress of the uneven wear determined based on the captured image data and the transition information acquired by the second acquisition processing unit 56. The first prediction processing unit 57 is an example of a prediction processing unit of the present disclosure.

Specifically, the first prediction processing unit 57 predicts the remaining service life of the tire, using a first prediction model 65 (see FIG. 3) (an example of a trained model of the present disclosure) trained based on second teacher data 64 (see FIG. 3) including the transition information indicating the transition of the remaining groove of the tire until the degree of progress of the uneven wear reaches any of the stages, information indicating this stage, and the transition information indicating the transition of the remaining groove of the tire after the degree of progress of the uneven wear reaches this stage.

In the tire determination system 100, the remaining service life of the tire is the remaining traveling distance of the tire until the end of the service life thereof is reached.

As shown in FIG. 3, the second teacher data 64 and the first prediction model 65 are stored in the storage unit 34.

The first prediction model 65 is a trained model obtained by learning the relationship between the transition information indicating the transition of the remaining groove of the tire until the degree of progress of the uneven wear reaches any of the stages, information indicating this stage, and the transition information indicating the transition of the remaining groove of the tire after the degree of progress of the uneven wear reaches this stage. In response to input of the transition information indicating the transition of the remaining groove of the tire until the degree of progress of the uneven wear reaches any of the stages and information indicating this stage (explanatory variables), the first prediction model 65 outputs the transition information (objective variables) indicating the transition of the remaining groove of the tire after the degree of progress of the uneven wear reaches this stage.

Specifically, the first prediction model 65 is a neural network. The first prediction model 65 is not limited to the neural network and may be a trained model that, in response to input of the transition information indicating the transition of the remaining groove of the tire until the degree of progress of the uneven wear reaches any of the stages and information indicating this stage, can output the transition information indicating the transition of the remaining groove of the tire after the degree of progress of the uneven wear reaches this stage.

The first prediction model 65 is generated by machine learning using the control unit 31 based on the second teacher data 64 stored in the storage unit 34 and a predetermined algorithm. The first prediction model 65 may be generated or trained by a control unit of an external information processing apparatus. In this case, the first prediction model 65 may be transferred from the external information processing apparatus and stored in the storage unit 34.

The second teacher data 64 is a data set that is used to generate and train the first prediction model 65.

The second teacher data 64 includes a combination of the transition information indicating the transition of the remaining groove of the tire until the degree of progress of the uneven wear reaches any of the stages, information indicating this stage, and the transition information (correct answer data) indicating the transition of the remaining groove of the tire after the degree of progress of the uneven wear reaches this stage.

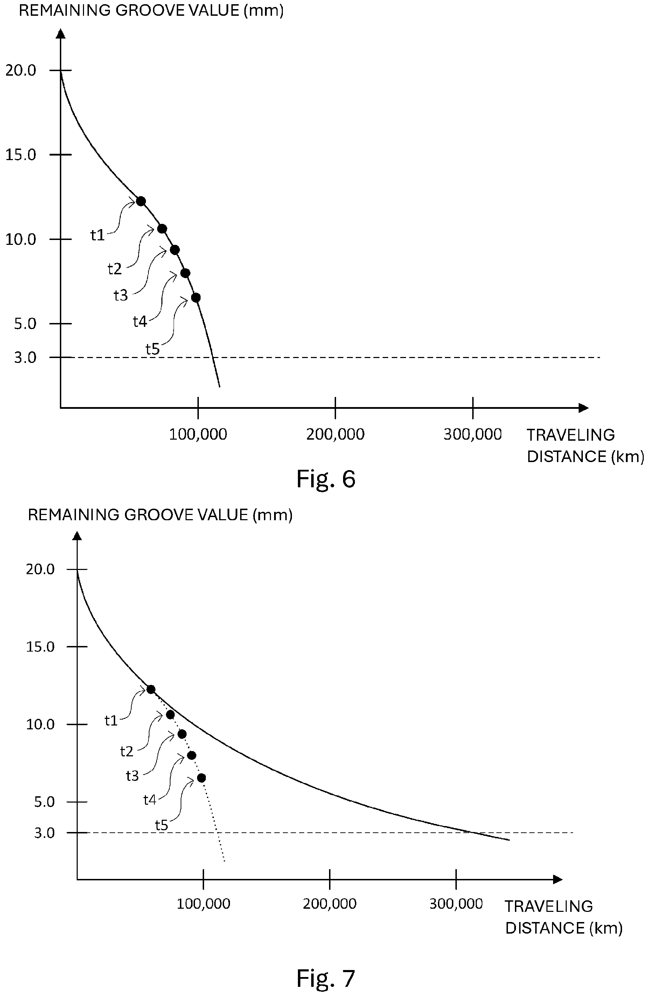

Here, the data included in the second teacher data 64 will be described specifically with reference to FIG. 6. FIG. 6 shows an example of the transition of the remaining groove, from the start of use, of the tire in which uneven wear occurred while in use and that was used beyond the service life thereof without performing rotation. In FIG. 6, a determination threshold value for the end of the service life of the tire is set to a remaining groove value of 3 mm (millimeters). In addition, in FIG. 6, "tn (1 ≤ n ≤ 5)" indicating the timing at which the degree of progress of the uneven wear reached the stage n is shown.

For example, the second teacher data 64 includes a combination of the transition information indicating the transition of the remaining groove of the tire from the start of use of the tire to timing t1 shown in FIG. 6, information indicating the stage 1, and the transition information (correct answer data) indicating the transition of the remaining groove of the tire from timing t1 shown in FIG. 6 until the remaining groove of the tire became less than 3 mm (millimeters).

The second teacher data 64 also includes a combination of the transition information indicating the transition of the remaining groove of the tire from the start of use of the tire to timing t2 shown in FIG. 6, information indicating the stage 2, and the transition information (correct answer data) indicating the transition of the remaining groove of the tire from timing t2 shown in FIG. 6 until the remaining groove of the tire became less than 3 mm (millimeters).

The second teacher data 64 also includes a combination of the transition information indicating the transition of the remaining groove of the tire from the start of use of the tire to timing t3 shown in FIG. 6, information indicating the stage 3, and the transition information (correct answer data) indicating the transition of the remaining groove of the tire from timing t3 shown in FIG. 6 until the remaining groove of the tire became less than 3 mm (millimeters).

The second teacher data 64 also includes a combination of the transition information indicating the transition of the remaining groove of the tire from the start of use of the tire to timing t4 shown in FIG. 6, information indicating the stage 4, and the transition information (correct answer data) indicating the transition of the remaining groove of the tire from timing t4 shown in FIG. 6 until the remaining groove of the tire became less than 3 mm (millimeters).

The second teacher data 64 also includes a combination of the transition information indicating the transition of the remaining groove of the tire from the start of use of the tire to timing t5 shown in FIG. 6, information indicating the stage 5, and the transition information (correct answer data) indicating the transition of the remaining groove of the tire from timing t5 shown in FIG. 6 until the remaining groove of the tire became less than 3 mm (millimeters).

The first prediction processing unit 57 inputs the result of the determination of the degree of progress of the uneven wear by the determination processing unit 55 and the transition information acquired by the second acquisition processing unit 56, into the first prediction model 65. Accordingly, the transition information (prediction result of the transition of the remaining groove) indicating the transition of the remaining groove of the tire from the present is outputted from the first prediction model 65. The first prediction processing unit 57 calculates the remaining traveling distance of the tire until the end of the service life thereof is reached (remaining service life of the tire) based on the transition information outputted from the first prediction model 65.

If the determination processing unit 55 determines that uneven wear has occurred, the second prediction processing unit 58 predicts the remaining service life of the tire in the case where rotation is performed on the tire, based on the degree of progress of the uneven wear determined based on the captured image data and the transition information acquired by the second acquisition processing unit 56.

Specifically, the second prediction processing unit 58 predicts the remaining service life of the tire in the case where rotation is performed on the tire, using a second prediction model 67 (see FIG. 3) trained based on third teacher data 66 (see FIG. 3) including the transition information indicating the transition of the remaining groove of the tire until rotation is performed on the tire, information indicating the degree of progress of the uneven wear of the tire when rotation is performed on the tire, and the transition information indicating the transition of the remaining groove of the tire after rotation is performed on the tire.

As shown in FIG. 3, the third teacher data 66 and the second prediction model 67 are stored in the storage unit 34.

The second prediction model 67 is a trained model obtained by learning the relationship between the transition information indicating the transition of the remaining groove of the tire until rotation is performed on the tire, information indicating the degree of progress of the uneven wear of the tire when rotation is performed on the tire, and the transition information indicating the transition of the remaining groove of the tire after rotation is performed on the tire. In response to input of the transition information indicating the transition of the remaining groove of the tire until rotation is performed on the tire and the information indicating the degree of progress of the uneven wear of the tire when rotation is performed on the tire (explanatory variables), the second prediction model 67 outputs the transition information (objective variables) indicating the transition of the remaining groove of the tire after rotation is performed on the tire.

Specifically, the second prediction model 67 is a neural network. The second prediction model 67 is not limited to the neural network and may be a trained model that, in response to input of the transition information indicating the transition of the remaining groove of the tire until rotation is performed on the tire and the information indicating the degree of progress of the uneven wear of the tire when rotation is performed on the tire, can output the transition information indicating the transition of the remaining groove of the tire after rotation is performed on the tire.

The second prediction model 67 is generated by machine learning using the control unit 31 based on the third teacher data 66 stored in the storage unit 34 and a predetermined algorithm. The second prediction model 67 may be generated or trained by a control unit of an external information processing apparatus. In this case, the second prediction model 67 may be transferred from the external information processing apparatus and stored in the storage unit 34.

The third teacher data 66 is a data set that is used to generate and train the second prediction model 67.

The third teacher data 66 includes a combination of the transition information indicating the transition of the remaining groove of the tire until rotation is performed on the tire, the information indicating the degree of progress of uneven wear of the tire when rotation is performed on the tire, and the transition information (correct answer data) indicating the transition of the remaining groove of the tire after rotation is performed on the tire.

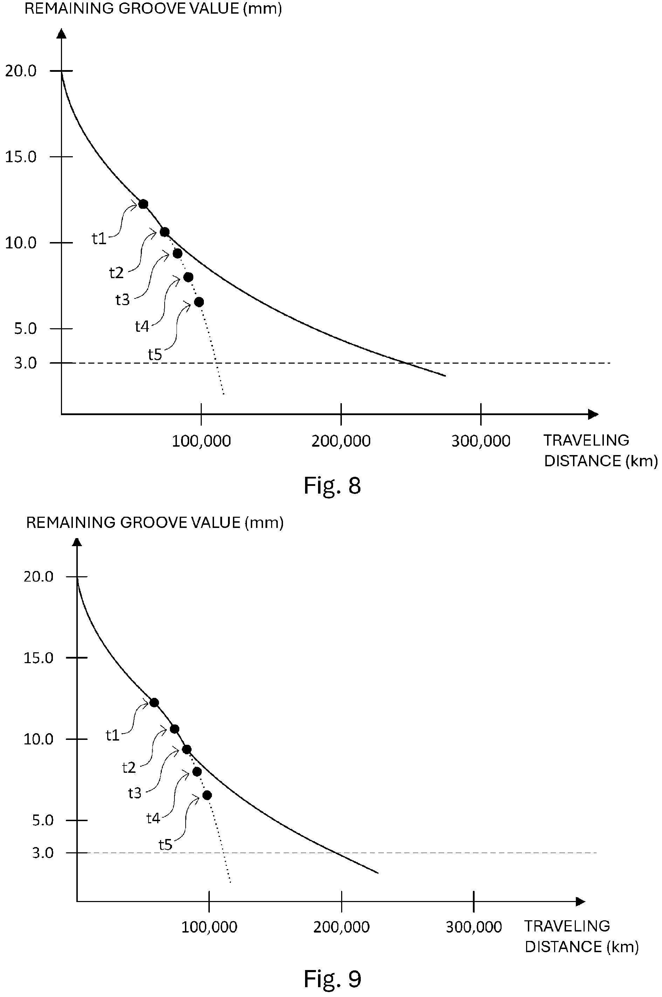

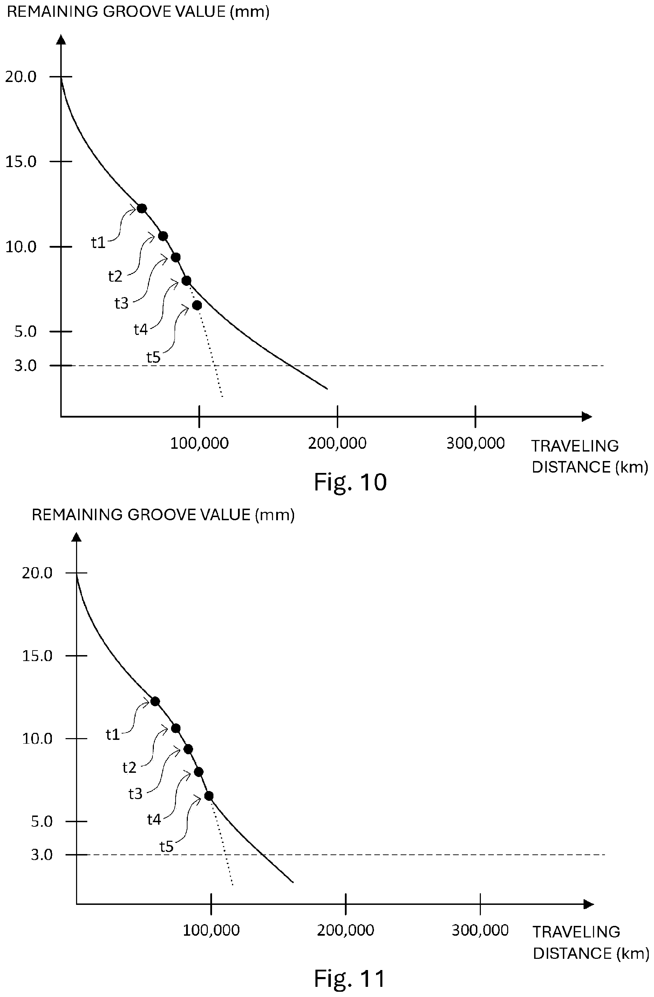

Here, the data included in the third teacher data 66 will be described specifically with reference to FIG. 7 to FIG. 11. FIG. 7 shows an example of the transition of the remaining groove, from the start of use, of the tire on which rotation was performed at timing t1 at which the degree of progress of the uneven wear reached the stage 1 and that was then used beyond the service life thereof. FIG. 8 shows an example of the transition of the remaining groove, from the start of use, of the tire on which rotation was performed at timing t2 at which the degree of progress of the uneven wear reached the stage 2 and that was then used beyond the service life thereof. FIG. 9 shows an example of the transition of the remaining groove, from the start of use, of the tire on which rotation was performed at timing t3 at which the degree of progress of the uneven wear reached the stage 3 and that was then used beyond the service life thereof. FIG. 10 shows an example of the transition of the remaining groove, from the start of use, of the tire on which rotation was performed at timing t4 at which the degree of progress of the uneven wear reached the stage 4 and that was then used beyond the service life thereof. FIG. 11 shows an example of the transition of the remaining groove, from the start of use, of the tire on which rotation was performed at timing t5 at which the degree of progress of the uneven wear reached the stage 5 and that was then used beyond the service life thereof. In FIG. 7 to FIG. 11, the predicted transition of the remaining groove of the tire in the case where rotation is not performed is shown by a dotted line.

For example, the third teacher data 66 includes a combination of the transition information indicating the transition of the remaining groove of the tire from the start of use of the tire to timing t1 shown in FIG. 7, information indicating the stage 1, and the transition information (correct answer data) indicating the transition of the remaining groove of the tire from timing t1 shown in FIG. 7 until the remaining groove of the tire became less than 3 mm (millimeters).

The third teacher data 66 also includes a combination of the transition information indicating the transition of the remaining groove of the tire from the start of use of the tire to timing t2 shown in FIG. 8, information indicating the stage 2, and the transition information (correct answer data) indicating the transition of the remaining groove of the tire from timing t2 shown in FIG. 8 until the remaining groove of the tire became less than 3 mm (millimeters).

The third teacher data 66 also includes a combination of the transition information indicating the transition of the remaining groove of the tire from the start of use of the tire to timing t3 shown in FIG. 9, information indicating the stage 3, and the transition information (correct answer data) indicating the transition of the remaining groove of the tire from timing t3 shown in FIG. 9 until the remaining groove of the tire became less than 3 mm (millimeters).

The third teacher data 66 also includes a combination of the transition information indicating the transition of the remaining groove of the tire from the start of use of the tire to timing t4 shown in FIG. 10, information indicating the stage 4, and the transition information (correct answer data) indicating the transition of the remaining groove of the tire from timing t4 shown in FIG. 10 until the remaining groove of the tire became less than 3 mm (millimeters).

The third teacher data 66 also includes a combination of the transition information indicating the transition of the remaining groove of the tire from the start of use of the tire to timing t5 shown in FIG. 11, information indicating the stage 5, and the transition information (correct answer data) indicating the transition of the remaining groove of the tire from timing t5 shown in FIG. 11 until the remaining groove of the tire became less than 3 mm (millimeters).

The second prediction processing unit 58 inputs the result of the determination of the degree of progress of the uneven wear by the determination processing unit 55 and the transition information acquired by the second acquisition processing unit 56, into the second prediction model 67. Accordingly, the transition information (prediction result of the transition of the remaining groove) indicating the transition of the remaining groove of the tire from the present in the case where rotation is performed is outputted from the second prediction model 67. The second prediction processing unit 58 calculates the remaining traveling distance of the tire until the end of the service life thereof is reached (remaining service life of the tire) in the case where rotation is performed, based on the transition information outputted from the second prediction model 67.

The first display processing unit 59 displays the result of the prediction by the first prediction processing unit 57 on the operation display unit 12 (an example of a display unit of the present disclosure) of the mobile terminal 2.

Specifically, the first display processing unit 59 displays the result of the prediction by the first prediction processing unit 57 and increase amount information indicating the amount of increase in the remaining service life of the tire by performing rotation on the tire, on the operation display unit 12 of the mobile terminal 2.

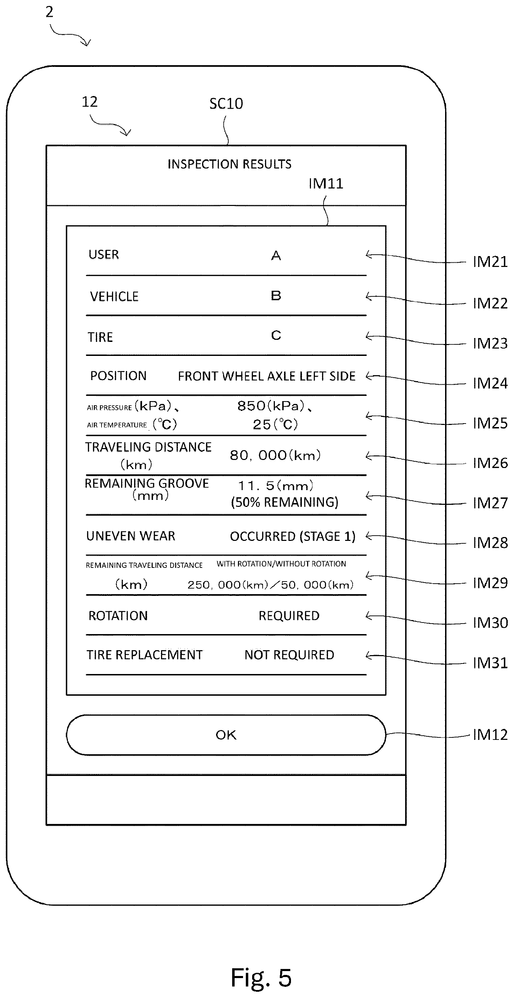

FIG. 5 shows an example of a first inspection result screen SC10 displayed on the operation display unit 12 of the mobile terminal 2 by the first display processing unit 59.

As shown in FIG. 5, the first inspection result screen SC10 includes an inspection result display section IM11 and an operation key IM12.

In the inspection result display section IM11, the inspection results of the tire to be inspected are displayed. Specifically, as shown in FIG. 5, the inspection result display section IM11 includes an image IM21 showing the name of the user (the transportation business entity) of the vehicle 5 to be inspected. The inspection result display section IM11 also includes an image IM22 showing the name of the vehicle 5 to be inspected. The inspection result display section IM11 also includes an image IM23 showing the name of the tire to be inspected. The inspection result display section IM11 also includes an image IM24 showing the mounting position of the tire to be inspected in the vehicle 5 to be inspected. The inspection result display section IM11 also includes an image IM25 showing the air pressure and the air temperature of the tire to be inspected acquired by the first acquisition processing unit 52. The inspection result display section IM11 also includes an image IM26 showing the traveling distance of the vehicle 5 to be inspected acquired by the first acquisition processing unit 52. The inspection result display section IM11 also includes an image IM27 showing the remaining groove of the tire to be inspected measured using the depth camera 4. The inspection result display section IM11 also includes an image IM28 showing the determination result of the determination processing unit 55. The inspection result display section IM11 also includes an image IM29 showing the result of the prediction by the first prediction processing unit 57 and the result of the prediction by the second prediction processing unit 58. The image IM29 is an image showing the increase amount information. The inspection result display section IM11 also includes an image IM30 showing the determination result of whether or not it is necessary to perform rotation on the tire. For example, in the tire determination system 100, if the degree of progress of the uneven wear of the tire is the stage 1 or higher, it is determined that it is necessary to perform rotation on the tire. The inspection result display section IM11 also includes an image IM31 showing the determination result of whether or not it is necessary to replace the tire. For example, in the tire determination system 100, if the remaining groove of the tire is 3 mm (millimeters) or less, it is determined that it is necessary to replace the tire.

The operation key IM12 is used to input an instruction to end the display of the first inspection result screen SC10.

In the tire determination system 100, if the degree of progress of the uneven wear of the tire is the stage n (2 ≤ n ≤ 5) or higher, it may be determined that it is necessary to perform rotation on the tire. In this configuration, if the degree of progress of the uneven wear of the tire is less than the stage n, the control unit 31 may display the remaining traveling distance until the degree of progress reaches the stage n, on the operation display unit 12 of the mobile terminal 2. That is, the control unit 31 may predict the timing for performing rotation on the tire.

For example, if the determination processing unit 55 determines that uneven wear has occurred and the degree of progress of the uneven wear of the tire is less than the stage n, the control unit 31 predicts the timing for performing rotation on the tire, based on the degree of progress of the uneven wear determined based on the captured image data and the transition information acquired by the second acquisition processing unit 56.

For example, the control unit 31 calculates a predicted value (hereinafter referred to as "first predicted value") of the remaining groove of the tire at a specific time in the future from the present, based on the transition information outputted from the first prediction model 65 and indicating the transition of the remaining groove of the tire from the present in the case where rotation is not performed. The first predicted value is a predicted value of the depth of the groove at a part of the tread portion of the tire where uneven wear has occurred.

In addition, the control unit 31 acquires a predicted value (hereinafter referred to as "second predicted value") of the depth of the groove at a part of the tread portion of the tire where no uneven wear has occurred, at the specific time. For example, the control unit 31 can acquire, as the second predicted value, a predicted value of the remaining groove of the tire at the specific time in the case where rotation is performed on the tire, which is calculated based on the transition information outputted from the second prediction model 67 and indicating the transition of the remaining groove of the tire from the present in the case where rotation is performed.

Then, the control unit 31 can determine that the specific time at which the difference between the first predicted value and the second predicted value allows the stage n to be evaluated as having been reached, is the timing for performing rotation on the tire.

### [Tire Determination Process]

Hereinafter, a tire remaining service life prediction method of the present disclosure will be described together with an example of the procedure of a tire determination process executed by the control unit 31 of the server 1, with reference to FIG. 4. Here, steps S11, S12... represent numbers of processing procedures (steps) executed by the control unit 31.

The tire determination process is executed when a predetermined operation is performed on the operation display unit 12 of the mobile terminal 2.

### <Step S11>

First, in step S11, the control unit 31 specifies the vehicle 5 to be inspected. The process in step S11 is executed by the first specification processing unit 51 of the control unit 31.

Specifically, the control unit 31 displays the vehicle registration number input screen on the operation display unit 12 of the mobile terminal 2. Then, the control unit 31 specifies a vehicle 5 corresponding to a vehicle registration number inputted on the vehicle registration number input screen, among the vehicles 5 registered in the database 61, as the vehicle 5 to be inspected.

### <Step S12>

In step S12, the control unit 31 acquires the traveling distance of the vehicle 5 to be inspected and the air pressure and the air temperature of each tire of the vehicle 5. The process in step S12 is executed by the first acquisition processing unit 52 of the control unit 31.

Specifically, the control unit 31 executes wireless communication with the in-vehicle device of the vehicle 5 to be inspected and acquires information indicating the cumulative traveling distance of the vehicle 5 and information indicating the detection results of the air pressure and the air temperature of each tire which are stored in the storage unit of the in-vehicle device.

### <Step S13>

In step S13, the control unit 31 specifies the tire to be inspected. The process in step S13 is executed by the second specification processing unit 53 of the control unit 31.

Specifically, the control unit 31 displays the mounting position selection screen on the operation display unit 12 of the mobile terminal 2. Then, the control unit 31 specifies the tire corresponding to a combination of the vehicle 5 to be inspected and the tire mounting position selected on the mounting position selection screen, among the tires registered in the database 61, as the tire to be inspected.

### <Step S14>

In step S14, the control unit 31 captures an image of the tire to be inspected, using the depth camera 4. The process in step S14 is executed by the imaging processing unit 54 of the control unit 31.

Specifically, the control unit 31 displays the imaging operation acceptance screen on the operation display unit 12 of the mobile terminal 2. Then, if the imaging instruction is accepted on the imaging operation acceptance screen, the control unit 31 transmits the imaging instruction to the mobile terminal 2. In addition, the control unit 31 acquires the captured image data transmitted from the wear detection device 3 to the mobile terminal 2, as the captured image data corresponding to the tire to be inspected, in accordance with the transmission of the imaging instruction.

### <Step S15>

In step S15, the control unit 31 executes a determination process. The determination process is a process of determining whether or not uneven wear has occurred in the tire to be inspected and the degree of progress of the uneven wear, based on the captured image data acquired by the process in step S14. The process in step S15 is an example of a determination step of the present disclosure and is executed by the determination processing unit 55 of the control unit 31.

Specifically, the control unit 31 inputs the captured image data acquired by the process in step S14 into the determination model 63. Accordingly, information indicating whether or not uneven wear has occurred in the tire to be inspected and the degree of progress of the uneven wear is outputted from the determination model 63. The control unit 31 acquires the information outputted from the determination model 63, as a determination result.

### <Step S16>

In step S16, the control unit 31 switches the subsequent process based on the result of the process in step S15.

Specifically, if it is determined that uneven wear has occurred in the tire to be inspected (Yes side of S16), the control unit 31 shifts the process to step S17. If it is determined that uneven wear has not occurred in the tire to be inspected (No side of S16), the control unit 31 shifts the process to step S21.

### <Step S17>

In step S17, the control unit 31 acquires the transition information indicating the transition of the remaining groove of the tire to be inspected. The process in step S17 is an example of an acquisition step of the present disclosure and is executed by the second acquisition processing unit 56 of the control unit 31.

Specifically, the control unit 31 acquires a relational expression (the transition information) indicating the relationship between the traveling distance of the vehicle 5 to be inspected from the time at which the tire was mounted thereto and the remaining groove of the tire in a period from the start of use of the tire to be inspected to the present.

### <Step S18>

In step S18, the control unit 31 executes a first prediction process. The first prediction process is a process of predicting the remaining service life of the tire, based on the degree of progress of the uneven wear determined by the process in step S15 and the transition information acquired by the process in step S17. The process in step S18 is an example of a prediction step of the present disclosure and is executed by the first prediction processing unit 57 of the control unit 31.

Specifically, the control unit 31 inputs the result of the determination of the degree of progress of the uneven wear by the process in step S15 and the transition information acquired by the process in step S17, into the first prediction model 65. Accordingly, the transition information (prediction result of the transition of the remaining groove) indicating the transition of the remaining groove of the tire from the present is outputted from the first prediction model 65. The control unit 31 calculates the remaining traveling distance of the tire until the end of the service life thereof is reached (remaining service life of the tire) based on the transition information outputted from the first prediction model 65.

### <Step S19>

In step S19, the control unit 31 executes a second prediction process. The second prediction process is a process of predicting the remaining service life of the tire in the case where rotation is performed on the tire, based on the degree of progress of the uneven wear determined by the process in step S15 and the transition information acquired by the process in step S17. The process in step S19 is executed by the second prediction processing unit 58 of the control unit 31.

Specifically, the control unit 31 inputs the result of the determination of the degree of progress of the uneven wear by the process in step S15 and the transition information acquired by the process in step S17, into the second prediction model 67. Accordingly, the transition information (prediction result of the transition of the remaining groove) indicating the transition of the remaining groove of the tire from the present in the case where rotation is performed is outputted from the second prediction model 67. The control unit 31 calculates the remaining traveling distance of the tire until the end of the service life thereof is reached (remaining service life of the tire) in the case where rotation is performed, based on the transition information outputted from the second prediction model 67.

### <Step S20>

In step S20, the control unit 31 displays the first inspection result screen SC10 (see FIG. 5) on the operation display unit 12 of the mobile terminal 2. The process in step S20 is executed by the first display processing unit 59 of the control unit 31.

### <Step S21>

In step S21, the control unit 31 displays the first inspection result screen SC10 (see FIG. 5) on the operation display unit 12 of the mobile terminal 2. The process in step S21 is executed by the first display processing unit 59 of the control unit 31.

In the first inspection result screen SC10 displayed in step S21, uneven wear of the tire is displayed as "not occurred". In addition, in the first inspection result screen SC10 displayed in step S21, the predicted value of the remaining traveling distance of the tire until the end of the service life thereof is reached if no uneven wear occurs in the tire, is displayed. The predicted value of the remaining traveling distance of the tire until the end of the service life thereof is reached if no uneven wear occurs in the tire may be acquired by a conventionally known method.

### <Step S22>

In step S22, the control unit 31 determines whether or not inspection work for the tires mounted on the vehicle 5 to be inspected has been completed.

Specifically, the control unit 31 determines that the inspection work for the tires has been completed, if all of the tire mounting positions have been selected on the mounting position selection screen.

Here, if the control unit 31 determines that the inspection work for the tires has been completed (Yes side of S22), the control unit 31 ends the tire determination process. If the inspection work for the tires has not been completed (No side of S22), the control unit 31 shifts the process to step S13.

As described above, the tire determination system 100 includes the first prediction processing unit 57 that, if the determination processing unit 55 determines that uneven wear has occurred, predicts the remaining service life of the tire, based on the degree of progress of the uneven wear determined based on the captured image data and the transition information acquired by the second acquisition processing unit 56. Accordingly, it is possible to predict the remaining service life of the tire in which uneven wear has occurred.

The tire determination system 100 may determine whether or not uneven wear that is a different type from "one-sided wear" has occurred in the tire, and the degree of progress of the uneven wear.

In addition, the tire determination system 100 may include the first teacher data 62, the determination model 63, the second teacher data 64, the first prediction model 65, the third teacher data 66, and the second prediction model 67, which are shown in FIG. 3, for each type of tire to be inspected. The type of the tire may be identified by one or a combination of a plurality of the tire dimension information, the tread pattern information, the use information, and the retread information included in the tire data. Accordingly, it is possible to improve the accuracy of predicting the remaining service life of the tire in which uneven wear has occurred.

In addition, the tire determination system 100 does not have to include the wear detection device 3. In this case, the imaging processing unit 54 may capture an image of the tire to be inspected, using the camera 15 of the mobile terminal 2. In addition, the determination processing unit 55 may determine whether or not uneven wear has occurred in the tire to be inspected, based on image data captured by the camera 15. In addition, the current remaining groove of the tire may be acquired based on the result of capturing an image of the tire by the imaging processing unit 54.

In addition, some or all of the processing units included in the control unit 31 of the server 1 may be provided in the mobile terminal 2.

### [Another Embodiment]

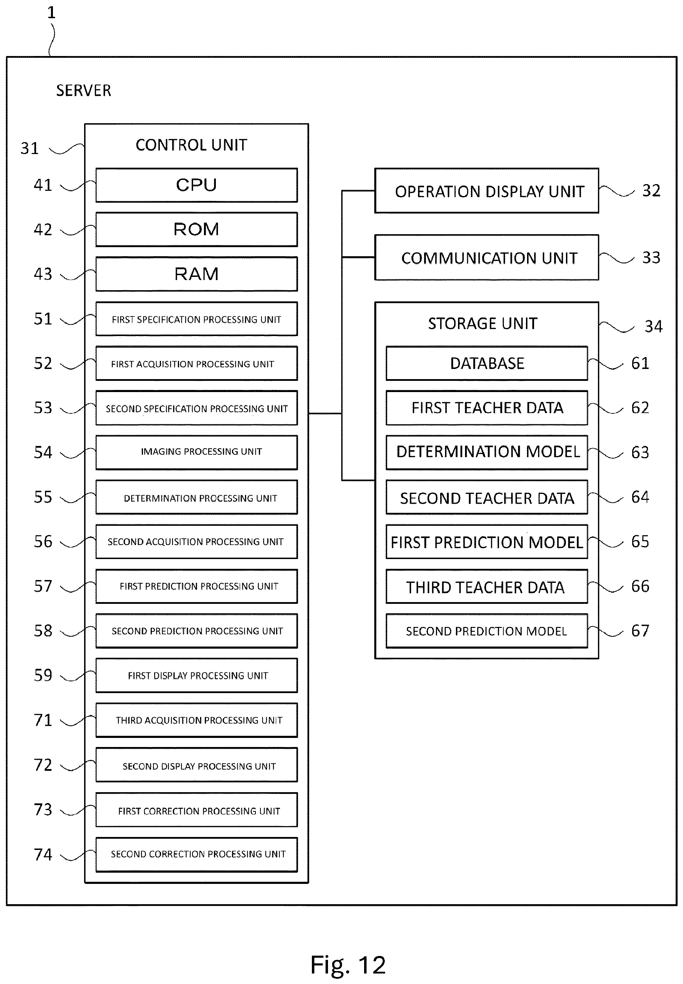

The control unit 31 of the server 1 may include a third acquisition processing unit 71, a second display processing unit 72, a first correction processing unit 73, and a second correction processing unit 74, which are shown in FIG. 12.

The third acquisition processing unit 71 acquires three-dimensional point group data indicating the shape of the tire, based on the captured image data captured by the depth camera 4 (see FIG. 1). The third acquisition processing unit 71 is an example of a second acquisition processing unit of the present disclosure.

Specifically, the third acquisition processing unit 71 generates the three-dimensional point group data, based on a plurality of pieces of the captured image data captured periodically by the depth camera 4 during one rotation of the tire.

The process of generating the three-dimensional point group data may be executed by an external information processing apparatus. In this case, the third acquisition processing unit 71 may cause the external information processing apparatus to execute the process of generating the three-dimensional point group data and acquire the three-dimensional point group data generated by this generating process.

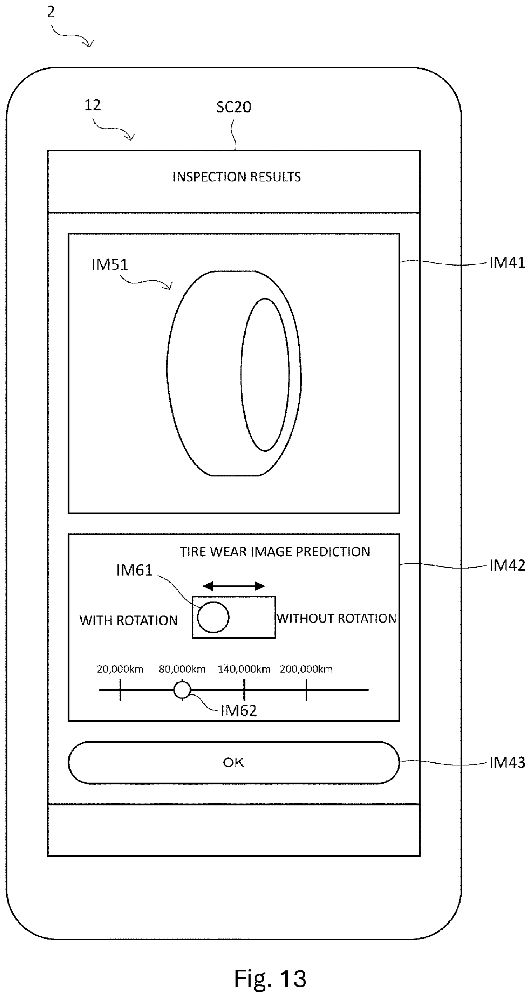

The second display processing unit 72 displays a three-dimensional tire image IM51 (see FIG. 13) based on the three-dimensional point group data acquired by the third acquisition processing unit 71, on the operation display unit 12 of the mobile terminal 2.

For example, if a predetermined display operation is accepted on the first inspection result screen SC10 (see FIG. 5), the second display processing unit 72 displays a second inspection result screen SC20 shown in FIG. 13, on the operation display unit 12 of the mobile terminal 2.

As shown in FIG. 13, the second inspection result screen SC20 includes a tire image display section IM41, a designation operation acceptance section IM42, and an operation key IM43.

The tire image IM51 (see FIG. 13) is displayed in the tire image display section IM41. In addition, a rotation operation for rotating the tire image IM51 is accepted on the tire image display section IM41. The rotation operation is a swipe operation. In addition, a zoom operation for zooming in or out the tire image IM51 is accepted on the tire image display section IM41. For example, the zoom operation is a pinch-out operation and a pinch-in operation.

The second display processing unit 72 rotates the tire image IM51 in response to the rotation operation in the tire image display section IM41. Specifically, the second display processing unit 72 rotates the tire image IM51 about an axis orthogonal to the direction of the rotation operation, in response to the rotation operation (swipe operation) in the tire image display section IM41.

The second display processing unit 72 zooms in or out the tire image IM51 in response to the zoom operation in the tire image display section IM41.

The designation operation acceptance section IM42 includes a first slide button IM61 and a second slide button IM62 shown in FIG. 13. The first slide button IM61 is used to select either "with rotation" or "without rotation". The second slide button IM62 is used to designate any time from the present to the time at which the end of the service life of the tire is reached.

The operation key IM43 is used to input a command to end the display of the second inspection result screen SC20.

The first correction processing unit 73 corrects the tire image IM51 displayed by the second display processing unit 72, in response to a first designation operation for designating a time after the time of the capture of the captured image data in a first period from the time of the capture to the time at which the end of the predicted service life of the tire is reached in the case where rotation is not performed on the tire.

Specifically, the first designation operation is an operation of sliding the second slide button IM62 in a state where "without rotation" is selected using the first slide button IM61.

When the first designation operation is accepted, the first correction processing unit 73 calculates a predicted value (hereinafter referred to as "third predicted value") of the remaining groove of the tire at the time designated by the first designation operation, based on the transition information outputted from the first prediction model 65 and indicating the transition of the remaining groove of the tire from the present in the case where rotation is not performed. The third predicted value is a predicted value of the depth of the groove at the part of the tread portion of the tire where uneven wear has occurred.

When the first designation operation is accepted, the first correction processing unit 73 acquires a predicted value (hereinafter referred to as "fourth predicted value") of the depth of the groove at the part of the tread portion of the tire where uneven wear has occurred at the time designated by the first designation operation. For example, the first correction processing unit 73 can acquire, as the fourth predicted value, a predicted value of the remaining groove of the tire at the time designated by the first designation operation in the case where rotation is not performed on the tire, which is calculated based on the transition information outputted from the second prediction model 67 and indicating the transition of the remaining groove of the tire from the present in the case where rotation is not performed.

The first correction processing unit 73 corrects the three-dimensional point group data, based on the third predicted value and the fourth predicted value. Specifically, the first correction processing unit 73 corrects the three-dimensional point group data such that the depth of the groove at the part of the tread portion of the tire where uneven wear has occurred is the third predicted value and the depth of the groove at a part of the tread portion where uneven wear has not occurred is the fourth predicted value.

Then, the first correction processing unit 73 displays the tire image IM51 corrected based on the corrected three-dimensional point group data, in the tire image display section IM41.

The second correction processing unit 74 corrects the tire image IM51 displayed by the second display processing unit 72, in response to a second designation operation for designating a time after the time of the capture of the captured image data in a second period from the time of the capture to the time at which the end of the predicted service life of the tire is reached in the case where rotation is performed on the tire.

Specifically, the second designation operation is an operation of sliding the second slide button IM62 in a state where "with rotation" is selected using the first slide button IM61.

When the second designation operation is accepted, the second correction processing unit 74 calculates a predicted value (hereinafter referred to as "fifth predicted value") of the remaining groove of the tire at the time designated by the second designation operation, based on the transition information outputted from the second prediction model 67 and indicating the transition of the remaining groove of the tire from the present in the case where rotation is performed. The fifth predicted value is a predicted value of the depth of each groove included in the tread portion of the tire.

The second correction processing unit 74 corrects the three-dimensional point group data, based on the fifth predicted value. Specifically, the second correction processing unit 74 corrects the three-dimensional point group data such that the depth of each groove included in the tread portion of the tire is the fifth predicted value.

Then, the second correction processing unit 74 displays the tire image IM51 corrected based on the corrected three-dimensional point group data, in the tire image display section IM41.

The embodiments of the present disclosure described above include disclosure items (1) to (8) described below.

A disclosure item (1) is a tire remaining service life prediction system including: a camera configured to capture an image of a tire mounted on a vehicle; a determination processing unit configured to determine whether or not uneven wear has occurred in the tire, based on the captured image captured by the camera; a first acquisition processing unit configured to acquire transition information indicating transition of a remaining groove of the tire; and a prediction processing unit configured to predict a remaining service life of the tire, based on a degree of progress of the uneven wear determined based on the captured image and the transition information acquired by the first acquisition processing unit, if the determination processing unit determines that the uneven wear has occurred.

With this system, it is possible to predict the remaining service life of the tire in which uneven wear has occurred.

A disclosure item (2) is the tire remaining service life prediction system according to the disclosure item (1), wherein the prediction processing unit predicts the remaining service life of the tire using a trained model trained based on teacher data including the transition information indicating the transition of the remaining groove until the degree of progress of the uneven wear reaches any stage, information indicating the stage, and transition information indicating the transition of the remaining groove after the degree of progress of the uneven wear reaches the stage.

With this system, it is possible to increase the accuracy of predicting the remaining service life of the tire in which uneven wear has occurred.

A disclosure item (3) is the tire remaining service life prediction system according to the disclosure item (1) or (2), further including a first display processing unit configured to display a result of the prediction by the prediction processing unit on a predetermined display unit.

With this system, it is possible to notify the user of the vehicle of the result of the prediction by the prediction processing unit. Therefore, it is possible to promote the user of the vehicle to perform rotation on the tire.

A disclosure item (4) is the tire remaining service life prediction system according to the disclosure item (3), wherein the first display processing unit displays the result of the prediction by the prediction processing unit and increase amount information indicating an amount of increase in the remaining service life of the tire by performing rotation on the tire, on the display unit.

With this system, it is possible to more strongly promote the user of the vehicle to perform rotation on the tire.

A disclosure item (5) is the tire remaining service life prediction system according to the disclosure item (3) or (4), wherein the camera is a depth camera, and the tire remaining service life prediction system further includes a second acquisition processing unit configured to acquire three-dimensional point group data indicating a shape of the tire, based on the captured image captured by the depth camera, and a second display processing unit configured to display a tire image based on the three-dimensional point group data acquired by the second acquisition processing unit, on the display unit.

With this system, it is possible to confirm the state of the tire in detail on a screen displayed on the display unit.

A disclosure item (6) is the tire remaining service life prediction system according to the disclosure item (5), further including: a first correction processing unit configured to correct the tire image displayed by the second display processing unit, in response to a first designation operation for designating a time after a time of capture of the captured image in a first period from the time of the capture to a time at which an end of a predicted service life of the tire is reached in a case where rotation is not performed on the tire; and a second correction processing unit configured to correct the tire image displayed by the second display processing unit, in response to a second designation operation for designating a time after a time of capture of the captured image in a second period from the time of the capture to a time at which an end of a predicted service life of the tire is reached in a case where rotation is performed on the tire.

With this system, it is possible to confirm the result of prediction of the shape of the tire in the future, in an image.

A disclosure item (7) is a tire remaining service life prediction method executed by one or more processors of a tire remaining service life prediction system including a camera configured to capture an image of a tire mounted on a vehicle, the tire remaining service life prediction method including: a determination step of determining whether or not uneven wear has occurred in the tire, based on the captured image captured by the camera; an acquisition step of acquiring transition information indicating transition of a remaining groove of the tire; and a prediction step of predicting a remaining service life of the tire, based on a degree of progress of the uneven wear determined based on the captured image and the transition information acquired by the acquisition step, if it is determined by the determination step that the uneven wear has occurred.

With this method, it is possible to predict the remaining service life of the tire in which uneven wear has occurred, as in the system of the disclosure item (1).

A disclosure item (8) is a program for causing one or more processors of a tire remaining service life prediction system, including a camera configured to capture an image of a tire mounted on a vehicle, to execute: a determination step of determining whether or not uneven wear has occurred in the tire, based on the captured image captured by the camera; an acquisition step of acquiring transition information indicating transition of a remaining groove of the tire; and a prediction step of predicting a remaining service life of the tire, based on a degree of progress of the uneven wear determined based on the captured image and the transition information acquired by the acquisition step, if it is determined by the determination step that the uneven wear has occurred.

With this program, it is possible to predict the remaining service life of the tire in which uneven wear has occurred, as in the system of the disclosure item (1).

The present disclosure may be a computer-readable storage medium having the program of the disclosure item (8) stored non-temporarily therein.

## Claims

1. A tire remaining service life prediction system comprising:
a camera (4) configured to capture an image of a tire mounted on a vehicle (5);
a determination processing unit (55) configured to determine whether or not uneven wear has occurred in the tire, based on the captured image captured by the camera (4);
a first acquisition processing unit (52) configured to acquire transition information indicating transition of a remaining groove of the tire; and
a prediction processing unit (57) configured to predict a remaining service life of the tire, based on a degree of progress of the uneven wear determined based on the captured image and the transition information acquired by the first acquisition processing unit (52), if the determination processing unit (55) determines that the uneven wear has occurred.

2. The tire remaining service life prediction system according to claim 1,
wherein the prediction processing unit (57) predicts the remaining service life of the tire using a trained model (65) trained based on teacher data (64) including the transition information indicating the transition of the remaining groove until the degree of progress of the uneven wear reaches any stage, information indicating the stage, and transition information indicating the transition of the remaining groove after the degree of progress of the uneven wear reaches the stage.

3. The tire remaining service life prediction system according to claim 1 or 2, further comprising a first display processing unit (59) configured to display a result of the prediction by the prediction processing unit (57) on a predetermined display unit (12).

4. The tire remaining service life prediction system according to claim 3,
wherein the first display processing unit (59) displays the result of the prediction by the prediction processing unit (57) and increase amount information indicating an amount of increase in the remaining service life of the tire by performing rotation on the tire, on the display unit (12).

5. The tire remaining service life prediction system according to claim 4,
wherein
the camera (4) is a depth camera (4), and
the tire remaining service life prediction system further comprises
a second acquisition processing unit (56) configured to acquire three-dimensional point group data indicating a shape of the tire, based on the captured image captured by the depth camera (4), and
a second display processing unit (72) configured to display a tire image (IM51) based on the three-dimensional point group data acquired by the second acquisition processing unit (56), on the display unit (12).

6. The tire remaining service life prediction system according to claim 5, further comprising:
a first correction processing unit (73) configured to correct the tire image (IM51) displayed by the second display processing unit (72), in response to a first designation operation for designating a time after a time of capture of the captured image in a first period from the time of the capture to a time at which an end of a predicted service life of the tire is reached in a case where rotation is not performed on the tire; and
a second correction processing unit (74) configured to correct the tire image (IM51) displayed by the second display processing unit (72), in response to a second designation operation for designating a time after a time of capture of the captured image in a second period from the time of the capture to a time at which an end of a predicted service life of the tire is reached in a case where rotation is performed on the tire.

7. A tire remaining service life prediction method executed by one or more processors of a tire remaining service life prediction system including a camera (4) configured to capture an image of a tire mounted on a vehicle (5), the tire remaining service life prediction method comprising:
a determination step (S15) of determining whether or not uneven wear has occurred in the tire, based on the captured image captured by the camera (4);
an acquisition step (S17) of acquiring transition information indicating transition of a remaining groove of the tire; and
a prediction step (S18) of predicting a remaining service life of the tire, based on a degree of progress of the uneven wear determined based on the captured image and the transition information acquired by the acquisition step (S17), if it is determined by the determination step (S15) that the uneven wear has occurred.

8. A program for causing one or more processors of a tire remaining service life prediction system, including a camera (4) configured to capture an image of a tire mounted on a vehicle (5), to execute:
a determination step (S15) of determining whether or not uneven wear has occurred in the tire, based on the captured image captured by the camera (4);
an acquisition step (S17) of acquiring transition information indicating transition of a remaining groove of the tire; and
a prediction step (S18) of predicting a remaining service life of the tire, based on a degree of progress of the uneven wear determined based on the captured image and the transition information acquired by the acquisition step (S17), if it is determined by the determination step (S15) that the uneven wear has occurred.
